# EUROPÄISCHE PATENTSCHRIFT

(11) **EP 2 543 836 B1**
(45) Veröffentlichungstag und Bekanntmachung des Hinweises auf die Patenterteilung: **02.09.2015**
(21) Anmeldenummer: 12175549.0
(22) Anmeldetag: 09.07.2012
(51) Int. Cl.: F01N 3/023, B01D 41/04

(54) **Verfahren und Vorrichtung zum Reinigen von Filtern und Katalysatoren**
Procédé et dispositif de nettoyage pour des filtres et catalyseurs
Method and device for cleaning filters and catalytic converters

(30) Priorität: 08.07.2011 AT 10002011
(43) Veröffentlichungstag der Anmeldung: 09.01.2013
(73) Patentinhaber: Hirtenberger Aktiengesellschaft, 2552 Hirtenberg (AT)
(72) Erfinder: Mayer, Hanspeter, 5421 Adnet (AT)
(74) Vertreter: Wirnsberger, Gernot

(56) Entgegenhaltungen:
- EP-A1- 1 369 161
- EP-A1- 2 446 952
- EP-A2- 0 335 240

## Beschreibung

Die Erfindung betrifft ein Verfahren zum Reinigen von abgasführenden Komponenten wie verschmutzten Filtern und Katalysatoren, insbesondere von Kraftfahrzeugfiltern und -katalysatoren, wobei während eines Reinigungsvorganges mit einer Diagnoseeinrichtung eine Qualitätsänderung einer zu reinigenden Komponente wie eines Filters oder Katalysators, insbesondere ein Reinigungsgrad, gemessen wird.

Des Weiteren betrifft die Erfindung eine Vorrichtung zum Reinigen von abgasführenden Komponenten wie verschmutzten Filtern und Katalysatoren, insbesondere von Kraftfahrzeugfiltern und -katalysatoren, umfassend eine Diagnoseeinrichtung und eine Reinigungseinrichtung, wobei mit der Diagnoseeinrichtung eine Qualitätsänderung der Komponente, insbesondere ein Reinigungsgrad, während eines Reinigungsvorganges messbar ist.

Die Zahl von verwendeten Filtern und Katalysatoren, insbesondere in Kraftfahrzeugen oder Industriemotoren, hat wegen sinkender Emissionsgrenzwerte in den letzten Jahren kontinuierlich zugenommen. Die Effektivität derartiger Filter und Katalysatoren nimmt auch z. B. bei aktiver und/oder passiver Regeneration von Filtern im Kraftfahrzeug bzw. während des Betriebes aufgrund von Alterungseffekten mit der Laufleistung eines Kraftfahrzeuges ab. Verantwortlich dafür sind dauerhafte, durch Regeneration nicht entfernbare Verunreinigungen sowie mechanische Beschädigungen der Filter oder Katalysatoren, die beispielsweise von Vibrationen oder thermischen Überlastungen hervorgerufen werden können, wie diese in einem Kraftfahrzeug üblich sind. Die Filter erfüllen daher vielfach nicht bis zum Ende der Lebensdauer eines Kraftfahrzeuges eine Funktion im gewünschten Ausmaß, sodass zulässige Emissionsgrenzwerte überschritten werden können. Filter oder Katalysatoren müssen deswegen nach Erreichen einer bestimmten Laufleistung ausgebaut und einem Service bzw. einer Wartung unterzogen werden, um diese wiederaufzubereiten oder aufgrund einer fundierten Diagnose auszuscheiden und durch neue zu ersetzen. Alternativ ist auch eine Reinigung und Diagnose im eingebauten Zustand möglich.

Das Dokument EP 2 446 952 A1, welches Stand der Technik nach Artikel 54 (3) EPÜ bildet, offenbart ein Verfahren, bei welchem ein Gegenstand wie ein Filter oder ein Katalysator in einem Gehäuse gereinigt wird.

Das Dokument EP 0 335 240 A2 offenbart ein Verfahren zum Reinigen eines Filters mittels Ultraschall.

Gegenwärtig existiert weder ein effizientes Verfahren noch eine entsprechende Vorrichtung, mit der ausgebaute Filter oder Katalysatoren in industriellem Maßstab automatisch untersucht und gereinigt werden können. Verfahren und Vorrichtungen des Standes der Technik haben die Nachteile, dass zur Diagnose eines mechanischen Zustandes oder eines Reinigungszustandes ein hoher Personaleinsatz erforderlich ist, wodurch derartige Prozesse noch sehr teuer sind. Weiter ist keine automatische Reinigung derartiger Filter in hohen Stückzahlen mit den dafür erforderlichen kurzen Taktzeiten möglich.

Aufgabe der Erfindung ist es, die Nachteile des Standes der Technik zu beheben oder zumindest zu verringern, indem ein besonders effizientes Verfahren zum Reinigen von abgasführenden Komponenten wie Filtern und Katalysatoren angegeben wird.

Des Weiteren soll eine Vorrichtung angegeben werden, mit der ein derartiges Verfahren umsetzbar ist.

Die erste Aufgabe wird erfindungsgemäß dadurch gelöst, dass bei einem Verfahren der eingangs genannten Art eine Qualitätsänderung der Komponente eine Änderung einer Reinigungsstrategie auslöst, wobei ein Wechsel von einer mechanischen auf eine thermische Reinigungseinrichtung oder umgekehrt erfolgt.

Dies hat den Vorteil, dass das Verfahren automatisch ablaufen kann und z. B. ein ausgebauter Filter oder Katalysator nur in dem Maße gereinigt wird, wie es erforderlich ist, um eine gewünschte Filterwirkung bzw. Durchlässigkeit zu erzielen, oder aber bis festgestellt wird, dass der Filter oder Katalysator zu stark beschädigt ist, um noch aufbereitet werden zu können, sodass von einer weiteren Reinigung abgesehen und der Filter oder Katalysator der Entsorgung oder Ausbesserung zugeführt werden kann. Dabei kann der Reinigungsvorgang mittels Daten der Diagnoseeinrichtung gesteuert und/oder geregelt werden. Dies hat den Vorteil, dass ein Reinigungserfolg während der Reinigung direkt erkannt wird bzw. zeitlich vorausberechnet und der Reinigungsprozess darauf abgestimmt werden kann.

Die Messung der Qualitätsänderung während der Reinigung schließt gegebenenfalls auch die Messung bzw. Bestimmung einer Funktionsänderung mit ein. Beispielsweise kann es bei einer Reinigung eines mit Rußpartikeln beladenen Filters dazu kommen, dass die Rußpartikel zwar entfernt werden, der Filter aber im Vergleich mit einem Ausgangszustand nach wie vor einen gleichen Gegendruck bewirkt. Dies wird bei der Messung der Qualitätsänderung festgestellt und eine weitere Reinigung des Filters abgebrochen oder ein anderer Reinigungsschritt eingeleitet.

Das erfindungsgemäße Verfahren kommt bevorzugt bei einer Reinigung von Wall-flow- bzw. Wandstromfiltern oder analog aufgebauten Katalysatoren mit Wabenstruktur zum Einsatz, kann aber auch bei der Reinigung strukturell anders aufgebauter Filter oder Katalysatoren eingesetzt werden. Es ist aber auch möglich, das erfindungsgemäße Verfahren für andere abgasführende Komponenten einzusetzen, z. B. Filter von Brennern oder Heizungsanlagen.

Es hat sich bewährt, dass kontinuierlich oder an vorgegebenen Punkten ein Reinigungszustand der Komponente mittels Druckverlustmessung gemessen wird. Ob eine kontinuierliche oder intermittierende Messung in kurzen Abständen durchgeführt wird, richtet sich nach dem Anwendungsfall. Die Druckverlustmessung kann mit einem Druckgefälle, das in Strömungsrichtung über z. B. dem Filter oder Katalysator aufgebracht wird, durchgeführt werden. Dabei wird ein Massen- oder Volumenstrom gemessen und daraus ein Strömungswiderstand des Filters oder Katalysators errechnet. Alternativ kann eine definierte Gasmenge auf den Filter oder Katalysator bzw. allgemein der Komponente aufgebracht werden und der Druck vor und nach der Komponente in Strömungsrichtung gemessen werden, um zu einer Aussage über den Strömungswiderstand der Komponente zu kommen. Es ist auch möglich, mehrere Differenzdrücke oder Gasströme hintereinander auf die Komponente aufzubringen, um ein Strömungsverhalten bei verschiedenen Drücken oder Volumenströmen zu erfassen. Ein Vorteil dieser Variante ist, dass diese Messung am Beginn des Reinigungsvorganges durchgeführt werden kann, um Auskunft über den Eingangszustand der Komponente zu erhalten, und nach einer durchgeführten ersten Reinigung eine Veränderung des Strömungsverhaltens gemessen werden kann, um ein Ansprechen der Komponente auf die Reinigung zu erfassen. Weiter kann auch festgestellt werden, wann die Reinigung abgeschlossen ist, da sich dann ein Strömungsverhalten der Komponente nicht mehr oder nur mehr sehr geringfügig mit weiteren Reinigungsmaßnahmen ändert. So kann beispielsweise eine gegen null gehende Änderung des Reinigungszustandes sehr vorteilhaft für eine Regelung einer Reinigungseinrichtung herangezogen werden, z. B. um einen Reinigungserfolg von mehr als 95 % sicherzustellen, was in der Regel für eine Reinigung als ausreichend betrachtet wird.

Alternativ zu einer Druckverlustmessung kann auch eine Gewichtsmessung oder eine Volumenstrommessung eines durchströmenden Gases erfolgen. Eine weiter Alternative stellt bei Wall-flow-Filtern eine Tiefensondierung mittels einer Sonde oder andere Verfahren zur Erkennung einer freien Tiefe eines Kanals in einer Zelle bzw. eines Kanalverschlusses, z. B. Reflexionsmessungen mit Ultraschall, dar. Wie die Druckverlustmessungen können die alternativen Messungen kontinuierlich oder intermittierend durchgeführt werden. Es ist auch möglich, mehrere der angeführten Alternativen gemeinsam anzuwenden, um eine Aussagekraft eines Messergebnisses zu erhöhen.

Um ein besonders genaues Messergebnis zu erhalten, kann die Druckverlustmessung auch derart durchgeführt werden, dass gleichzeitig ein Druck vor und nach der Komponente (Differenzdruckmessung) sowie ein Volumenstrom über der Komponente gemessen wird, um auf das Strömungsverhalten in der Komponente zu schließen. Über die Variation des Volumenstroms kann so auch bei offenen oder neuwertigen Komponenten der gleiche Gegendruckwert wie bei einer verschmutzten Komponente eingestellt werden. Da saubere Komponenten, insbesondere Filter oder Katalysatoren vom Wall-flow-Typ, für den gleichen Gegendruck einen wesentlich höheren Volumenstrom benötigen, können so vergleichbare Messergebnisse gewonnen werden.

Es hat sich bewährt, dass kontinuierlich oder an vorgegebenen Punkten ein struktureller Zustand der Komponente optisch gemessen wird. Damit kann auch die Effizienz des Verfahrens erhöht werden, da mit einem derartigen Verfahrensschritt strukturell schwerst beschädigte Komponenten zu Beginn des Reinigungsvorganges erkannt und anschließend direkt ausgeschleust und entsorgt werden können, ohne dass an diesen eine kostenintensive vollständige Reinigung durchgeführt wird. Alternativ zu einer optischen Messung, die beispielsweise automatisch mittels einer Laser-Distanzmessung eine Zelltiefe eines Wall-flow-Filters erfasst, kann auch eine Erfassung des strukturellen Zustandes mittels einer Kamera oder manuell mittels visueller Inspektion erfolgen. Darüber hinaus sind auch weitere auf elektromagnetischen oder mechanischen Wellen basierende Messverfahren, beispielsweise Röntgen-, Ultraschall- oder Eigenfrequenzmessungen, zur Erfassung und Klassifizierung des strukturellen Zustandes der Komponente einsetzbar. Auch die Erfassung des strukturellen Zustandes der Komponente kann zeitlich kontinuierlich oder zumindest an mehreren Punkten durchgeführt werden, um eine Veränderung dieses Zustandes während des Reinigungsvorganges festzustellen und damit zu verhindern, dass eine Komponente, die während des Reinigungsvorganges beschädigt wird, wieder an einen Kunden ausgeliefert wird. Insbesondere bei Filtern oder Katalysatoren kann auch eine katalytische Funktion bzw. ein Zustand einer katalytischen Beschichtung erfasst werden, was insbesondere bei Filtern und Katalysatoren für Abgasreinigungssysteme mit selektiver katalytischer Reduktion (SCR) wichtig ist.

Bevorzugt ist vorgesehen, dass eine Qualitätsänderung der Komponente in den Reinigungsvorgang als Regelgröße eingeht und der Reinigungsvorgang bei Erreichen eines vorgegebenen Grenzwertes oder einem Nichterreichen einer vorgegebenen Qualitätsänderung, insbesondere innerhalb einer vorbestimmten Zeitspanne, beendet wird. Damit lässt sich unnötiger Reinigungsaufwand vermeiden, da nur so lange gereinigt wird, wie eine zusätzliche Reinigung zu einer zusätzlichen Erhöhung des Reinigungsgrades der Komponente führt. Damit kann die Effizienz des Verfahrens weiter erhöht werden.

Erfindungsgemäß ist vorgesehen, dass eine Qualitätsänderung der Komponente eine Änderung einer Reinigungsstrategie auslöst, wobei ein Wechsel von einer mechanischen auf eine thermische Reinigungseinrichtung oder umgekehrt erfolgt. Vielfach kann ein Reinigungszustand einer Komponente mittels einer mechanischen Reinigungseinrichtung nur bis zu einem bestimmten Wert optimiert werden. Um über diesen Grenzwert hinauszugehen, kann es erforderlich sein, einen thermischen Reinigungsprozessschritt durchzuführen, der Verunreinigungen der Komponente, insbesondere durch Abbrennen bei hohen Temperaturen, lösen kann. Um diesen Wechsel von einer mechanischen Reinigungseinrichtung auf eine thermische Reinigungseinrichtung automatisieren zu können, wird der Reinigungszustand der Komponente kontinuierlich oder an vorgegebenen Punkten gemessen und vorzugsweise automatisch ein Wechsel auf eine thermische Reinigungseinrichtung durchgeführt, sobald erkennbar ist, dass eine weitere Reinigung mittels einer mechanischen Reinigungseinrichtung, insbesondere einer Drucklufteinrichtung, keine Verbesserung des Reinigungszustandes der Komponente bewirkt. Der thermische Reinigungsprozess erfolgt unter gesteuerter Wärme- und Sauerstoffzufuhr.

Dabei kann der Reinigungszustand während des thermischen Reinigens oder vor und nach dem thermischen Reinigen gemessen werden, um festzustellen, wann auch mit einer weiteren thermischen Reinigung keine Verbesserung des Reinigungszustandes mehr erreicht werden kann. In diesem Fall wird die Komponente von der thermischen Reinigungseinrichtung wieder auf die mechanische Reinigungseinrichtung bewegt, wo dann ein weiterer Reinigungserfolg mittels mechanischer Reinigung möglich ist. Grundsätzlich kann beliebig oft zwischen verschiedenen Reinigungsschritten gewechselt werden, bis der gewünschte Reinigungserfolg eingetreten ist.

Es hat sich bewährt, dass eine mechanische Reinigung der Komponente mittels eines unter Überdruck stehenden gasförmigen Prozessmediums, insbesondere Luft, durchgeführt wird, wenngleich auch andere Medien, z. B. feste Partikel, gegebenenfalls im Gemisch mit einem flüssigen Medium, eingesetzt werden können. Dabei kann das unter Überdruck stehende gasförmige Medium aus einer oder mehreren Düsen, die innerhalb oder außerhalb der Komponente angeordnet sind, insbesondere auch oberhalb und unterhalb eines Filters oder Katalysators vom Wall-flow-Typ, aufgebracht werden, um den Filter oder Katalysator zu reinigen. Besonders bevorzugt werden Hochgeschwindigkeitsluftdüsen eingesetzt, die aufgrund einer hohen Geschwindigkeit bei gleichzeitig geringer Menge einen hohen Luftaustrittsimpuls erzeugen, der damit den Luftbedarf, gemessen in Liter je Minute, gegenüber vergleichbaren Anlagen deutlich reduzieren kann. Alternativ zu Luft ist selbstverständlich auch eine Verwendung anderer Gase wie Kohlendioxid, Stickoxid, Wasserdampf sowie verschiedener Inertgase oder eine Kombination dieser Gase möglich. Des Weiteren ist auch eine Reinigung mit einem flüssigen Medium, beispielsweise Wasser, oder einem mehrphasigen Medium, beispielsweise Luft mit Trockeneispartikeln, denkbar. Bei Verwendung von Luft als Reinigungsmedium ist es mit dem erfindungsgemäßen Verfahren möglich, bei Bedarf mit weniger als 1000 Liter Druckluft pro Minute einen Anlagenbetrieb und eine Filter- bzw. Katalysatorreinigung gewährleisten zu können. Dabei kann eine Düse im Sparbetrieb mit weniger als 500 Liter Druckluft oder Reinigungsgas pro Minute arbeiten, bei Volllast mit 500 Liter pro Minute oder mehr und einer praktikablen Obergrenze von 5000 Liter pro Minute. Bei Schnellreinigungen können mehrere Düsen auf einer Oberseite und einer Unterseite mit einem Gasstrom von mehr als 500 Liter pro Minute verwendet werden. Insbesondere bei tief in einer Zelle eines Filters oder Katalysators sitzenden Verunreinigungen können Hochgeschwindigkeitsdüsen mit eng gebündeltem Gasstrom eingesetzt werden. Dieser Verfahrensschritt kann auch als physikalische Reinigung bezeichnet werden, da die der Komponente anhaftenden Verunreinigungen mittels einer äußeren Krafteinwirkung gelöst werden. Die Einleitung dieser Kraft kann dabei über feste, flüssige oder gasförmige Medien oder eine Kombination derselben oder über auf die Komponente aufgebrachte Beschleunigungen, beispielsweise in einer Rütteleinrichtung, erfolgen.

Es hat sich bewährt, dass in einem Verfahrensschritt eine thermische Reinigung der Komponente mittels Erhitzen, insbesondere in einem Ofen, durchgeführt wird. Aufgrund der Tatsache, dass manche Ablagerungen an Filtern oder Katalysatoren nicht mechanisch, insbesondere nicht mit Druckluft, ablösbar sind, diese jedoch in einem Ofen unter hoher Temperatur abgebrannt werden können, ist es von Vorteil, im Verfahren einen thermischen Reinigungsschritt vorzusehen, bei dem die Komponente in einem Ofen erhitzt wird, bis alle damit lösbaren Verunreinigungen abgebrannt sind. Dabei kann alternativ zum Erhitzen in einem Ofen auch eine Wärme eines heißen Gasstromes oder eine Strahlungs- oder Konvektionswärme einer heißen Oberfläche zur Erhitzung genutzt werden. Auch eine Erhitzung des Filters oder Katalysators auf induktive Weise, mittels Mikrowellenstrahlung oder anderer elektromagnetischer Wellen ist an dieser Stelle eine mögliche Alternative. Weiter kann alternativ oder ergänzend zu einer thermischen Reinigung auch eine chemische Reinigung eingesetzt werden, bei welcher die der Komponente anhaftenden Verunreinigungen durch chemische Verfahren, insbesondere durch Einwirken von Lösungsmitteln, gelöst werden.

Um Gesundheitsrisiken für ein Bedienpersonal zu reduzieren, ist es von Vorteil, dass Verunreinigungen, die z. B. aus dem Filter oder Katalysator entfernt werden, abgesaugt und recycelt werden. Damit wird ein wesentlicher Nachteil vorhandener Anlagen zur Reinigung von Filtern und Katalysatoren behoben, da diese sehr hohe Gesundheitsrisiken für das Bedienpersonal bergen. Dies wird behoben, wenn die Komponenten in einem abgeschlossenen Arbeitsbereich gereinigt und gelöste Verunreinigungen über ein Druckgefälle von einem Arbeitsbereich zu einer Filteranlage transportiert werden. Somit ist es auch möglich, einen geschlossenen Kreislauf des Prozessmediums zu schaffen und einen Verlust zu minimieren. Die ausgeschiedenen Stoffe können in anderen Prozessen wieder eingesetzt werden, z. B. als Füllstoffe für Baumaterialien oder, gegebenenfalls nach einer Aufbereitung, als Werkstoff in der Industrie oder für Kosmetik.

Für eine besonders effiziente Verfahrensführung ist es von Vorteil, dass eine Abwärme des Reinigungsvorganges diesem wieder zugeführt wird, insbesondere zur Vorwärmung einer mechanischen Einrichtung. Damit lassen sich auf besonders einfache Weise Energiekosten reduzieren.

Bevorzugt ist vorgesehen, dass mittels einer Luftabsaugung ein definiertes Druckgefälle erzeugt wird, mit dem ein verunreinigtes Prozess- bzw. Reinigungsmedium wie verunreinigte Druckluft von einem Arbeitsraum zu einer Filteranlage transportiert wird, wo dieses gereinigt wird. Damit wird einerseits gewährleistet, dass der Arbeitsraum rein bleibt und andererseits, dass Verunreinigungen, die aus der Komponente gelöst werden, ständig einer Filteranlage zugeführt werden und aus dem Prozessmedium abgeschieden und gesammelt werden.

Dabei ist es besonders von Vorteil, dass ein Filtrat aus der Filteranlage in einem Staubfangbehälter aufgenommen wird. Dieser Staubfangbehälter bzw. dessen Inhalt kann dann automatisch oder manuell besonders einfach einer Weiterverwendung, insbesondere einem Recycling oder einer Entsorgung, zugeführt werden. Beispielsweise kann der Abfall als Bestandteil bzw. Füllstoff bei Baustoffen eingesetzt werden.

Es hat sich bewährt, dass ein Prozessmedium nach einer Reinigung wiederverwendet wird. Damit werden einerseits etwaige Restverunreinigungen im Prozessmedium nicht an die Außenluft, die Umgebung oder ein anderes Reinigungsmedium abgegeben und eine gegebenenfalls nach einer thermischen Reinigung im Prozessmedium vorhandene Wärme kann wieder dem Verfahren durch Wärmetausch rückgeführt werden. Auf diese Weise werden Energiekosten gespart und eine Verunreinigung der Umwelt vermieden.

Es ist von Vorteil, dass die Komponente ein Filter oder Katalysator ist und Betriebsdaten der Komponente mit Messdaten aus der Diagnoseeinrichtung verknüpft werden, um mathematische Alterungsmodelle abzugleichen. Damit können einerseits validierte Langfristmodelle von Filtern und Katalysatoren unter verschiedensten Einsatzbedingungen und Reinigungsprozessen erstellt werden, andererseits lassen sich daraus optimale Strategien für die Reinigung von Filtern oder Katalysatoren erstellen. Beispielsweise ist es mit abgesicherten Alterungsmodellen möglich, im Fahrzeug aufgrund der aufgezeichneten Fahrzeughistorie den optimalen Zeitpunkt zur Filterregeneration zu bestimmen und den Filter zu tauschen, noch bevor eine merkbare Verschlechterung der Filterwirkung auftritt.

Bevorzugt ist vorgesehen, dass eine Filtrationswirkung der Komponente über eine Anzahl und/oder Menge von die Komponente bei gegebenen Druckverhältnissen passierenden Partikeln gemessen wird. Daraus lassen sich z. B. besonders günstig Rückschlüsse auf die Dichtheit eines Filter- oder Katalysatorsubstrates ziehen. Diese Dichtheit ist nicht mehr gewährleistet, wenn beispielsweise Risse durch den Filter oder Katalysator gehen, sodass sich mit dieser Art der Messung auch Risse besonders einfach erkennen lassen. Alternativ könnten Risse im Filter oder Katalysator auch mittels Röntgenmessung oder Ultraschallprüfung bzw. anderen schwingungsbasierten Messverfahren festgestellt werden.

Es hat sich bewährt, dass eine Verschmutzung der Komponente mit Kraftstoff oder Motoröl durch einen Kohlenwasserstoffsensor gemessen wird. Dies ist insbesondere am Beginn des Reinigungsverfahrens wesentlich, damit brennbare Rückstände erkannt werden können, die im Zuge einer thermischen Reinigung zu unerwünschten Explosionen führen könnten. Sofern derartige Rückstände erkannt werden, muss die Komponente vor Durchführung der thermischen Reinigung von diesen Rückständen befreit werden. Der Kohlenwasserstoffsensor kann als optischer, chemischer oder mechanischer Sensor ausgebildet sein.

Die zweite Aufgabe wird erfindungsgemäß dadurch gelöst, dass bei einer Vorrichtung der eingangs genannten Art eine mechanische und eine thermische Reinigungseinrichtung vorgesehen sind und abhängig von der gemessenen Qualitätsänderung der Komponente eine Reinigungsstrategie änderbar ist, indem ein Wechsel von der mechanischen auf die thermische Reinigungseinrichtung oder umgekehrt erfolgt. Dabei kann zumindest ein Teil der Vorrichtung, insbesondere die Reinigungseinrichtung, mittels Daten der Diagnoseeinrichtung steuer- und/oder regelbar sein.

Damit wird eine Vorrichtung bereitgestellt, auf der ein Closed-loop-Prozess möglich ist, bei dem Daten aus dem Prozess, nämlich der Reinigung, wieder in den Prozess einfließen können, was ein effizientes Reinigungsverfahren bzw. einen geregelten Diagnose- und Reinigungsprozess ermöglicht.

Bevorzugt ist vorgesehen, dass die Diagnoseeinrichtung einen Kohlenwasserstoffsensor umfasst. Alternativ kann der Kohlenwasserstoffsensor auch als separater Sensor ausgeführt sein, um vor Einbringen z. B. eines Filters oder Katalysators in die Reinigungseinrichtung Rückstände von Motoröl oder Kraftstoff erkennen zu können, die sich im Zuge einer thermischen Reinigung entzünden könnten. Bei Kontaminierung erfolgt ein Trocknen und Entfernen mit Schutzgas oder durch eine geregelte Sauerstoffzufuhr und Erwärmung, sodass die Rückstände kontrolliert abgebrannt werden.

Es ist von Vorteil, dass die Diagnoseeinrichtung eine Waage umfasst. Gegebenenfalls kann auch eine Kraftmesseinrichtung vorgesehen sein. Damit lässt sich auf besonders einfache Weise eine Gewichtsänderung während des Reinigungsvorganges erfassen, die auf das Entfernen von Rückständen zurückzuführen ist. Sobald sich das Gewicht während eines Reinigungsvorganges nicht mehr ändert, kann dies als Indikator dafür gewertet werden, dass keine weitere Erhöhung eines Reinigungsgrades mehr stattfindet.

Bevorzugt ist vorgesehen, dass die Diagnoseeinrichtung einen optischen Sensor aufweist, mit dem eine Zelltiefe der Komponente und/oder eine Anzahl von bis auf einen Grund gereinigten Zellen messbar ist, wobei als Zelle jeder in Strömungsrichtung an einer Stelle endseitig geschlossene Strömungskanal zu verstehen ist. Dabei kann es sich um einen Laser, einen Lichtsensor oder eine Kamera handeln. Alternativ kann die Zelltiefe auch mittels mechanischer Messverfahren, mittels Röntgenbildgebung oder Ultraschalmessverfahren ermittelt werden. Die Zelltiefe gibt Aufschluss über den Verschmutzungsgrad einzelner Zellen der Komponente in deren Tiefe, insbesondere eines Wall-flow-Filters, sodass mit einer Messung aller Zellen oder nahezu aller Zellen eine Aussage über einen Gesamtverschmutzungsgrad z. B. des Filters oder Katalysators möglich ist. Dadurch kann vor allem ausgeschlossen werden, dass die Komponente wie ein Filter oder Katalysator an einem Ende noch stark verschmutzt ist, obwohl an sich, gesamt betrachtet, bereits ein guter Reinigungserfolg erzielt worden ist. Gleichzeitig kann mit statistischen Methoden auch aus der gemessenen Tiefe weniger Zellen mit einer errechenbaren Wahrscheinlichkeit auf einen Verschmutzungsgrad geschlossen werden.

Es kann auch vorgesehen sein, dass die Diagnoseeinrichtung eine Einrichtung umfasst, mit welcher ein Druckverlust in der Komponente messbar ist, insbesondere ein Druckmessgerät, in das ein Volumen- und Massenstromsensor integriert ist. Damit kann bei einem vorgegebenen Volumenstrom der Druckverlust in der Komponente gemessen sowie das Strömungsverhalten der Komponente bei unterschiedlichen Massenströmen oder unterschiedlichen Druckdifferenzen ermittelt werden. Durch Verwendung eines Druckmessgerätes, in das ein Volumen- und Massenstromsensor integriert ist, kann eine besonders genaue Charakterisierung des Strömungsverhaltens z. B. in einem Filter oder Katalysator durchgeführt werden.

Es ist von Vorteil, dass die Diagnoseeinrichtung einen optischen Sensor umfasst, insbesondere eine Kamera, mit welcher ein struktureller Zustand der Komponente ermittelbar ist. Damit kann einerseits eine mechanisch stark beschädigte Komponente bereits vor Eintritt in den Reinigungsvorgang aussortiert und gegebenenfalls entsorgt werden, andererseits lässt sich damit auch feststellen, ob eine Komponente durch den Reinigungsvorgang beschädigt wird. So kann verhindert werden, dass im Reinigungsprozess beschädigte Komponenten wieder an Kunden ausgeliefert werden.

Es hat sich bewährt, dass mit der Vorrichtung mehrere Komponenten, insbesondere Filter oder Katalysatoren, parallel bzw. zeitgleich und/oder sequenziell vollautomatisiert reinigbar sind. Dies ist besonders deshalb wichtig, da damit dem Erfordernis einer Vorrichtung für die industrielle Diagnose und Reinigung von Filtern und Katalysatoren Rechnung getragen werden kann. Weiter steigert dies auch die Effizienz, da so beispielsweise Gruppen von Filtern oder Katalysatoren gebildet werden können, die einen ähnlichen Verschmutzungsgrad aufweisen und den gesamten Reinigungsvorgang anschließend gemeinsam durchlaufen.

Es ist auch von Vorteil, dass die Reinigungseinrichtung eine Pneumatikeinrichtung umfasst, mit welcher der Filter oder Katalysator mechanisch mittels eines unter Überdruck stehenden gasförmigen Mediums, bevorzugt Luft, reinigbar ist. Es kann dann auch vorgesehen sein, dass mehrere Luftdüsen zum Austritt einer Reinigungsluft vorhanden sind. Diese Düsen können außerhalb oder gegebenenfalls innerhalb der Komponente sowie insbesondere oberhalb und unterhalb angeordnet sein, um einen Reinigungserfolg zu maximieren. Bevorzugt werden Hochgeschwindigkeitsdüsen verwendet, die bei einer geringen Luftmenge bereits einen hohen Luftaustrittsimpuls erreichen, sodass mit geringer Luftmenge eine hohe Reinigungswirkung erzielt werden kann. Grundsätzlich können im Rahmen der Erfindung aber auch flüssige oder feste Medien sowie Kombinationen von Medien verschiedener Aggregatzustände eingesetzt werden.

Zweckmäßig ist es, dass die Reinigungseinrichtung eine Einrichtung umfasst, mit welcher der Filter oder Katalysator thermisch, z. B. in einem Ofen, reinigbar ist. Dabei können Verunreinigungen, die mittels mechanischer Reinigung nicht gelöst werden können, abgebrannt oder zumindest durch Erhitzung und nachfolgende Abkühlung gelockert werden. Alternativ zur Reinigung in einem Ofen ist auch eine thermische Reinigung mittels eines Heißgasstroms oder mittels einer Strahlungswärme eines nahe des Filters oder Katalysators platzierten heißen Gegenstandes denkbar. Darüber hinaus ist auch eine Erhitzung mittels elektromagnetischer Wellen, beispielsweise ähnlich einem Vorgang in einem Induktionsofen, möglich.

Bevorzugt ist vorgesehen, dass die Vorrichtung einen Sockel umfasst, der licht- und/oder gasdurchlässig ist und auf dem die Komponente befestigbar oder lagerbar ist. Damit kann einerseits durch den Sockel ein Prozessmedium wie beispielsweise Luft abgesaugt oder in einen Arbeitsraum eingeblasen werden, andererseits ist es auch möglich, optische Untersuchungen durch den Sockel oder auf dem Sockel durchzuführen. Es kann auch vorgesehen sein, dass die Komponente mit einem bewegbaren Arm frei positionierbar und gegebenenfalls verfahrbar auf dem Sockel positioniert wird. Damit ergibt sich eine weitere Möglichkeit, das zu reinigende Objekt relativ zu einer Reinigungseinrichtung, wie beispielsweise Reinigungsdüsen, zu positionieren. Diese Einrichtung zum Befestigen der Komponente kann so ausgelegt sein, dass unabhängig von Größe oder Form der Komponente dieser damit befestigbar ist, um der Anlage z. B. Flexibilität für eine Vielzahl von Filtern oder Katalysatoren verschiedener Hersteller zu geben.

Um eine Taktzeit oder Prozessdauer zu minimieren, ist es von Vorteil, dass die Komponente zwischen der Diagnoseeinrichtung und der Reinigungseinrichtung automatisiert bewegbar angeordnet ist, insbesondere mit Robotern und/oder Fließbändern. So kann eine vollständig automatisierte Manipulation von z. B. Filtern oder Katalysatoren zwischen den einzelnen Bestandteilen der Vorrichtung erreicht werden.

Bevorzugt kann es auch sein, dass mindestens eine Filteranlage vorgesehen ist, mit der ein Prozessmedium reinigbar ist. Dies hat den Vorteil, dass ein Prozessmedium wiederverwendet werden kann und dass Rückstände aus den Komponenten nicht zu einer Gesundheitsgefährdung eines Bedienpersonals führen müssen.

Um ein Wiederverwenden des Prozessmediums zu erleichtern, ist es von Vorteil, dass eine Luft- bzw. Medienabsaugung vorgesehen ist, mit der ein Prozessmedium von einem Arbeitsraum zu einer Filteranlage und nach Reinigung des Prozessmediums in der Filteranlage wieder zum Arbeitsraum transportierbar ist. Mit dieser Luftabsaugung wird ein Druckgefälle in der Vorrichtung hergestellt, mit dem ein Prozessmedium in einem Kreislauf vom Arbeitsraum zur Filteranlage und von dieser wieder zum Arbeitsraum transportiert werden kann. Damit kann auch der Verfahrensschritt des Reinigens des Prozessmediums vollautomatisch durchgeführt werden und das Prozessmedium ohne Risiko für etwaiges Bedienpersonal gereinigt und wiederverwendet werden. Bei dieser Vorrichtung kann auch ein Wärmetauscher vorgesehen sein, über den eine Prozesswärme vom Prozessmedium dem Prozess wieder zugeführt wird, bevor das Prozessmedium in die Filteranlage eingebracht wird.

Weitere Merkmale, Vorteile und Wirkungen der Erfindung ergeben sich anhand des nachfolgend dargestellten Ausführungsbeispiels. Die Zeichnungen, auf welche dabei Bezug genommen wird, zeigen:
Fig. 1a eine Reinigungsanlage für Druckluftreinigung in Seitenansicht;
Fig. 1b eine Reinigungsanlage für Druckluftreinigung in Draufsicht;
Fig. 2 einen Verlauf eines Reinigungszustandes eines Filters oder Katalysators über einer Reinigungszeit;
Fig. 3 einen vollständigen Reinigungsprozess inklusive der Prozessschritte der Anlieferung und der Auslieferung an einen Kunden;
Fig. 4 ein Diagramm betreffend einen Gegendruck an verschiedenen Messstellen während eines Reinigungsvorganges;
Fig. 5 eine aus Daten bzw. Messwerten gemäß Fig. 4 erhaltene Ausgleichskurve.

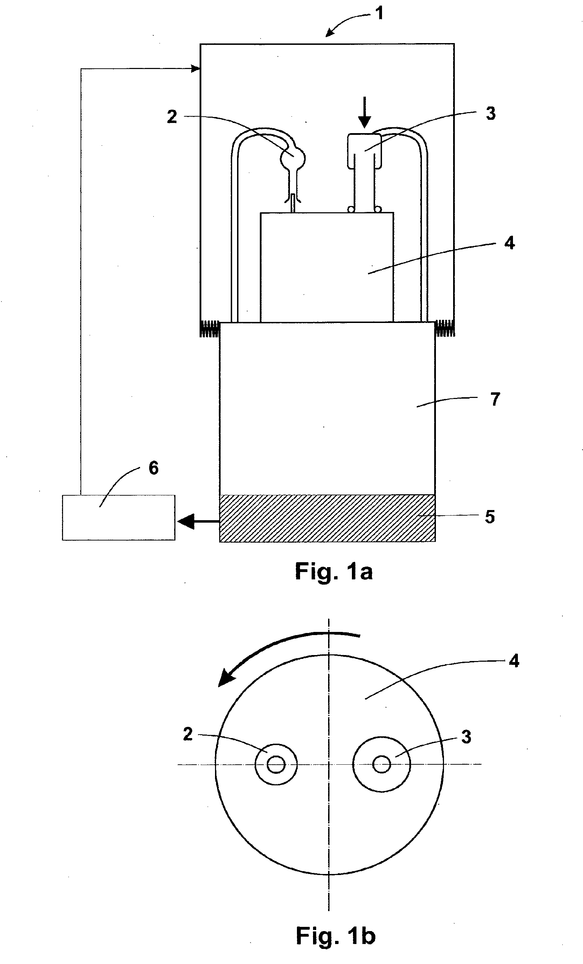

Fig. 1a und 1b zeigen eine Vorrichtung 1 zur Druckluftreinigung von abgasführenden Komponenten wie Filtern oder Katalysatoren, die insbesondere in diesel- oder benzinbetriebenen Kraftfahrzeugen eingesetzt werden und zum Zwecke einer Wartung ausgebaut sind. Die Vorrichtung 1 kann darüber hinaus auch zur Reinigung von Katalysatoren für SCR oder Filtern aus Industrieanlagenverwendet werden. Weiter können auch Filter 4 aus Heizungen oder Blockheizkraftwerken in der Vorrichtung 1 gereinigt werden.

Ein Filter 4, typischerweise ein Wall-flow-Filter, befindet sich hierbei auf einem Sockel 7 in einem Arbeitsraum, der von einer Abdeckung seitlich und oben sowie dem Sockel 7 unten begrenzt wird. Im Arbeitsraum können Drücke deutlich über- und unterhalb der Umgebungsluft vorherrschen, weshalb die Abdeckung derart ausgeführt ist, dass sie diesen Drücken standhalten kann. Des Weiteren ist die Vorrichtung 1 explosionsgeschützt nach Norm ATEX, Zone 22 ausgeführt, um die Sicherheit eines Bedienpersonals gewährleisten zu können. Oberhalb des Filters 4 ist links eine Pneumatikeinrichtung 2 in Form einer Druckluftdüse schematisch abgebildet, mit welcher der Filter 4 gereinigt wird, beispielsweise durch spiralförmige Bewegung über dem oberen Ende des Filters 4 oder segmentweise Beaufschlagung einzelner Zellen. Bei einer spiralförmigen Führung der Druckluftdüse oder gegebenenfalls mehrerer Druckluftdüsen werden während der Reinigung alle Zellen mit Druckluft beaufschlagt, indem die Düsen in einer Kreisbahn von einer Außenseite zu einem Zentrum des Filters 4 und zurück geführt werden, wobei bei jedem Verfahren der Düsen diese ein Stück über die Filteroberfläche weiterbewegt werden. Gleichzeitig oder alternativ kann auch der Filter zwischen jedem Verfahren der Düsen gedreht werden. Alternativ zur Reinigung mit Luft ist auch eine Reinigung mit einem anderen Gas, beispielsweise Kohlendioxid, Stickstoff, Propan, Butan, einem Inertgas oder auch mittels Trockeneis oder anderen festen Materialien möglich. Weiter ist die Verwendung einer Reinigungseinrichtung mit mehreren Düsen, die beliebig um oder im Filter 4 oder Katalysator angeordnet werden können, denkbar. Der Sockel 7 bzw. die Basis ist gasdurchlässig und optional lichtdurchlässig ausgeführt, sodass gegebenenfalls auch eine Durchlichtmessung in diesem Arbeitsraum möglich ist. Mit einer derartigen Durchlichtmessung können beispielsweise Risse im Filter 4 besonders einfach erkannt werden. Der Arbeitsraum ist gegenüber der Umgebung derart abgedichtet, dass auch bei einem herrschenden Unterdruck im Innenraum trotz einer großen differenzdruckbeaufschlagten Lateralfläche eine gleichbleibende Öffnungskraft zum Öffnen und Schließen eines oberen Gehäuseteils erforderlich ist. Diese Funktionalität kann auf mehrere Arten bereitgestellt werden, bevorzugt wird ein Differentialkolben verwendet. Zur Sichtprüfung ist die obere Abdeckung aus einem durchsichtigen Material ausgeführt, um jederzeit visuell den Zustand des Filters 4 überprüfen zu können. Die Druckluftdüsen können mittels einer nicht dargestellten Kinematik in jeder Richtung relativ zum Filter 4 bewegt werden, um diesen von jeder Seite reinigen zu können. Diese Kinematik kann bevorzugt auch pneumatisch angetrieben werden, um Energiekosten zu reduzieren. Es kann auch vorgesehen sein, dass die Kinematik kontinuierliche Schwenkbewegungen durchführt, um den Filter 4 gleichmäßig von mehreren Seiten abwechselnd zu reinigen. Im Ausführungsbeispiel ist auch vorgesehen, dass der Filter 4 während eines Reinigungsvorganges in eine Rotation um eine vertikale Achse versetzt wird, um einen Reinigungserfolg zu erhöhen. Bei der Vorrichtung 1 kann weiter auch vorgesehen sein, dass eine Kamera den Inhalt des Arbeitsraumes erfasst, sodass eine Positionierung der Reinigungsdüsen oder der Reinigungseinrichtung auf die Größe und Position des Filters 4 abgestimmt werden kann. Die Düsen sind bevorzugt als Hochgeschwindigkeitsdüsen ausgeführt, um eine benötigte Luftmenge zu minimieren. Dies wird besonders dann günstig erreicht, wenn die Druckluftdüsen einen schmalen Luftkegel erzeugen und somit ein hoher Impuls pro Fläche erzielt werden kann. Dieser hohe Impuls wird für eine punktförmige Luftbestrahlung der einzelnen Filterzellen benötigt, um in der Tiefe einer Filterzelle noch einen für die Reinigung ausreichenden Luftstrom zu erreichen. Damit lässt sich bei einer Vorrichtung 1 ein Druckluftvolumenstrombedarf auf weniger als 1000 Liter pro Minute für den Anlagenbetrieb und die Filterreinigung senken. In den Sockel 7 ist bei dieser Ausführungsvariante eine Luftabsaugung 5 integriert, von welcher das verunreinigte Prozessmedium, in diesem Fall Luft, vom Arbeitsraum abgesaugt und einer Filteranlage 6 zugeführt wird. In dieser Filteranlage 6 wird das Prozessmedium anschließend gereinigt und nach dieser Reinigung wieder dem Arbeitsraum zugeführt. Damit ist einerseits gewährleistet, dass das Prozessmedium ständig einen erforderlichen Reinheitsgrad aufweist und andererseits im Prozessmedium gespeicherte Prozesswärme wieder für den Prozess zur Verfügung stehen kann. Die Filteranlage 6 wiederum kann derart ausgeführt sein, dass sich diese selbständig durch eine mechanische oder pneumatische Einrichtung reinigt und ein dabei anfallendes Filtrat in einen Staubfangbehälter transportiert wird. Bevorzugt ist ein derartiger Staubfangbehälter als Einweggebinde ausgeführt. Damit muss das Bedienpersonal nie in Kontakt mit den gesundheitsschädlichen Substanzen des Filtrats kommen. Von der Luftabsaugung 5 wird andauernd ein definiertes Druckgefälle in der Einrichtung erzeugt, das eine gerichtete Strömung erzielt, die das Prozessmedium vom Arbeitsraum zur Filteranlage 6 und von dieser wieder zurück zum Arbeitsraum transportiert. Ein Zuluftventil und ein Unterdruckgebläse mit einer Abluftleitung sorgen dabei für eine "Quellen-Senkenströmung" innerhalb der Anlage. Im Arbeitsraum kann auch eine Lichtquelle und eine Lichterkennungseinheit wie ein Lichtsensor oder eine Kamera integriert sein, um Risse oder Fehlstellen im Prüfling auch während der Druckluftreinigung erkennen zu können. Ein Reinigungsergebnis kann auch mittels einer Waage gemessen werden, die beispielsweise unterhalb des Sockels 7 angeordnet sein kann und das Gewicht des Filters 4 kontinuierlich misst. Die Waage kann selbstverständlich auch in den Sockel 7 integriert sein oder diesen bilden. Damit lässt sich sehr einfach erkennen, wann trotz weiterer Reinigung kein Reinigungserfolg mehr erzielbar ist und eine andere Reinigungsstrategie gewählt werden muss. Es kann auch eine Beschriftungs- und Leseeinheit vorgesehen sein, mit der jeder Prüfling eindeutig beschrift- und identifizierbar ist, damit sich eine historische Entwicklung eines Reinigungsgrades eines Filters 4 während eines Reinigungsvorganges eindeutig verfolgen lässt.

Zur Reinigung kann auch vorgesehen sein, dass ein Gas erhitzt wird, das beispielsweise organische Substanzen im Filter 4 oder Katalysator chemisch umwandelt bzw. verbrennt. Auf dem Filter 4 in Fig. 1 ist neben der Druckluftdüse ein Druckmessgerät 3 aufgesetzt, in das ein Drucksensor und ein Volumen- oder Massenstromsensor integriert ist. Mit diesem Messgerät kann ein Strömungsverhalten im Filter 4 besonders genau bestimmt werden, da der Druckaufbau bei gegebenem Volumenstrom oder ein Volumenstrom bei gegebenem Differenzdruck exakt messbar ist. Damit wird kontinuierlich der Differenzdruck des Filters 4 gemessen, sodass eine Aussage über den Reinigungszustand möglich ist. Die bei der Reinigung und Diagnose des Filters 4 gewonnen Daten werden über eine Schnittstelle zu einem Datenerfassungs- und Auswertesystem geleitet, auf dem Reinigungs- sowie Diagnosedaten des einzelnen Filters 4 verknüpft werden können, gegebenenfalls mit vorhandenen Daten über den Betrieb des Filters 4, sodass sich Lebensdauermodelle von Filtern und Katalysatoren wesentlich besser abgleichen lassen können, als es bisher möglich war. Damit kann bereits im Vorfeld ein Filterversagen besonders genau prognostiziert werden und ein Ausfall des Filters 4, der beispielsweise zum Versagen eines Kraftfahrzeuges führen könnte, vermieden werden. Weiter können damit Daten aus dem Fahrzeugbetrieb mit Zustandsdaten eines Filters 4 oder Katalysators verknüpft werden, um aus entsprechenden Daten eventuell auf Probleme im Fahrzeug, beispielsweise einen defekten Turbolader, schließen zu können. Mit der automatischen Vorrichtung 1 ist es möglich, die von Fahrzeugherstellern benötigten Stückzahlen von bis 3000 Stück pro Tag zu bearbeiten. Gleichzeitig kann damit bei einem erheblichen Anteil von zu reinigenden Komponenten auf einen chemischen oder thermischen Reinigungsprozess verzichtet werden, da das physikalische Verfahren mit den Hochgeschwindigkeitsluftdüsen bereits zur Erreichung der geforderten Reinigungsleistung führt. Wird die thermische Reinigung auch in diesem Arbeitsraum durchgeführt, kann beispielsweise als Reinigungsmittel Heißgas verwendet werden, um vorhandenen Ruß im Filter 4 abzubrennen. Alternativ kann auch der gesamte Arbeitsraum aufgeheizt werden.

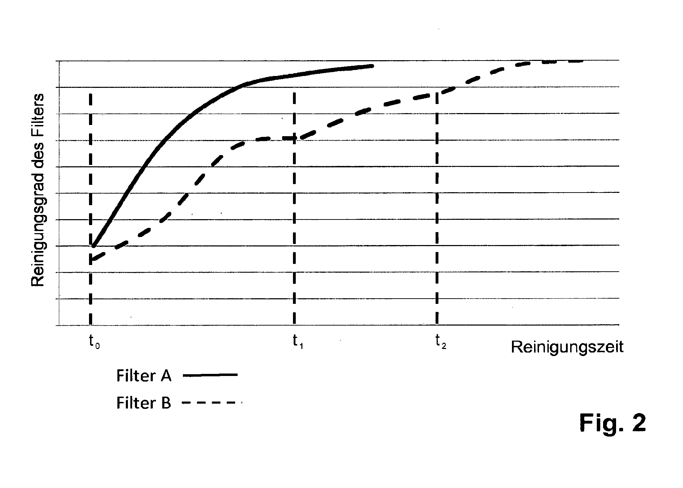

Fig. 2 zeigt einen typischen Reinigungsverlauf über eine Reinigungszeit von zwei unterschiedlich stark verschmutzten Filtern, wobei Filter A anfangs etwas weniger als Filter B verschmutzt ist. Im ersten Bereich zwischen t₀ und t₁ werden die Filter nur mittels Druckluft gereinigt. Dabei wird bei Filter A bereits ein hohes Reinigungsniveau erreicht; bei Filter B wird nur ein suboptimales Plateau erreicht, auf dem eine weitere Reinigung zu keiner Verbesserung der Reinigungsleistung führt. An diesem Punkt erkennt die Vorrichtung 1 die Notwendigkeit, die Reinigungsstrategie für Filter B zu ändern und auf ein thermisches Verfahren zu wechseln. Im zweiten Bereich zwischen t₁ und t₂ ist auch bei Filter B eine weitere Erhöhung des Reinigungsgrades erkennbar, bis auch mit einer thermischen Reinigung nur mehr sehr geringe Erfolge erzielbar sind. Auch dies wird von der Regelung wieder erkannt und der Filter B wieder der physikalischen Reinigung mittels Druckluft zugeführt wird, wo nun eine weitere Verbesserung des Reinigungsgrades möglich wird.

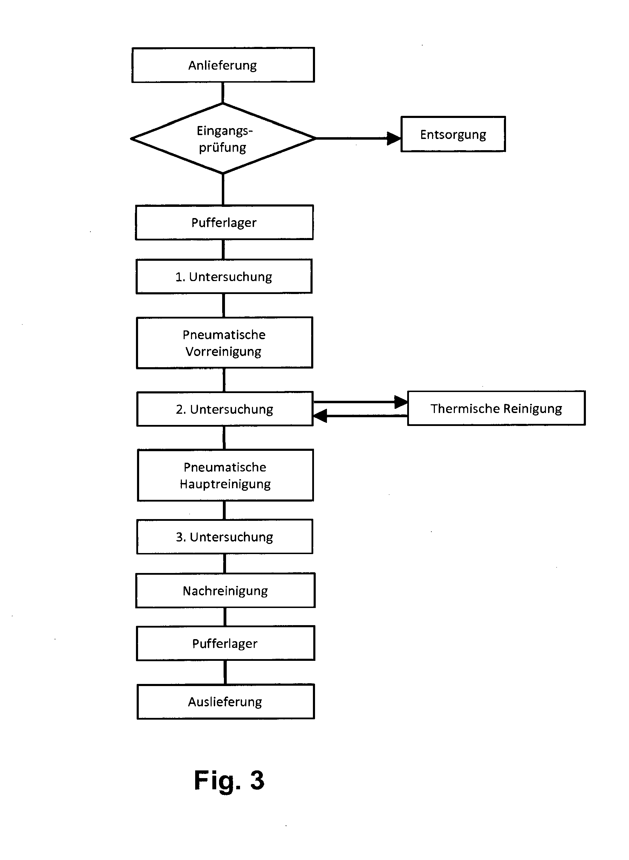

Fig. 3 zeigt ein Flussdiagramm eines typischen Reinigungs- und Diagnoseverfahrens, wobei ein Filter 4 oder Katalysator vom Kunden angeliefert wird. Im ersten Schritt wird manuell oder mittels eines automatisierten Bilderkennungsverfahrens ein struktureller Zustand des Filters 4 oder des Katalysators erfasst und entschieden, ob der Filter 4 oder Katalysator der Reinigung zugeführt wird oder eine Reinigung nicht mehr zweckmäßig erscheint und der Filter 4 oder Katalysator entsorgt werden muss. Bei einem schadhaften Filter 4 oder Katalysator kann unter Umständen auch auf eine Ursache für den Schaden geschlossen werden; die entsprechende Information kann dem Kunden gegebenenfalls mit empfohlenen Maßnahmen zur Vermeidung gleicher Schäden in Zukunft übermittelt werden. Wird der Filter 4 oder Katalysator als reinigbar bewertet, so wird dieser einem Pufferspeicher zugeführt, aus dem dieser von einer automatisierten Logistik entnehmbar ist. Sobald der Filter 4 oder Katalysator aus dem Puffer entnommen wird, wird der aktuelle Reinigungszustand überprüft, um einen Nutzen der folgenden Schritte genau nach dem Reinigungsvorgang bewerten zu können. Ebenfalls vor Beginn der eigentlichen Reinigung, jedenfalls vor einer thermischen Reinigung, wird mittels eines Kohlenwasserstoffsensors analysiert, ob Rückstände von Benzin oder Motoröl im Filter 4 oder Katalysator enthalten sind, die vor thermischer Reinigung jedenfalls zu entfernen sind. Anschließend erfolgt ein Prozessschritt des Vorreinigens mittels physikalischer Reinigungsverfahren bzw. einer erfindungsgemäßen Vorrichtung 1, insbesondere mittels Druckluft. Im Anschluss wird der Reinigungszustand des Filters 4 oder Katalysators abermals gemessen. Diese Messung kann kontinuierlich während des Reinigens erfolgen. Sobald erkennbar ist, dass ohne Änderung des Reinigungsverfahrens keine Verbesserung des Reinigungszustandes erzielbar ist, der gewünschte Reinigungserfolg aber noch nicht erreicht ist, wird vom physikalischen Verfahren auf ein thermisches Verfahren gewechselt. Dort wird der Filter 4 oder Katalysator in einem Ofen oder mittels eines heißen Gasstromes oder auf andere Weise erhitzt, sodass allenfalls vorhandener Ruß im Filter 4 oder Katalysator abbrennt. Auch hier kann kontinuierlich oder an verschiedenen Zeitpunkten der Reinigungszustand erfasst und bei Unterschreiten eines vorgegebenen Reinigungsgradienten über der Reinigungszeit der Prozess abgebrochen und der Filter 4 oder Katalysator wieder einer pneumatischen Reinigung zugeführt werden. Dabei wird wieder gereinigt, bis keine weitere Verbesserung des Reinigungszustandes erzielbar ist, bevor der Filter 4 oder Katalysator weiter zur nächsten Überprüfung transportiert wird. Hier kann nochmals der strukturelle Zustand des Filters 4 oder Katalysators überprüft werden, insbesondere ob durch die Reinigungsvorgänge keine mechanischen Beschädigungen am Filter 4 oder Katalysator aufgetreten sind. Sofern der Filter 4 oder Katalysator den hier angelegten Kriterien standhält, wird er abschließend nochmals gereinigt bevor dieser in einen Warenausgangsspeicher transportiert wird. Von dort kann der Filter 4 oder Katalysator wieder zum Kunden geliefert werden. Die gesamte Durchlaufzeit eines Filters 4 oder Katalysators in diesem Prozess überschreitet in der Regel nicht 20 Minuten pro Filter 4 oder Katalysator, sodass dieser Prozess sehr geeignet ist, um im Rahmen einer industriellen Fertigung angewendet zu werden. Bei kleineren Anlagen mit weniger Prüflingen pro Arbeitstag kann eine Prozessdauer zugunsten der Anschaffungskosten auf über eine Stunde verlängert werden, wobei ansonsten gleichzeitig ablaufende Prozesse nacheinander ablaufen können.

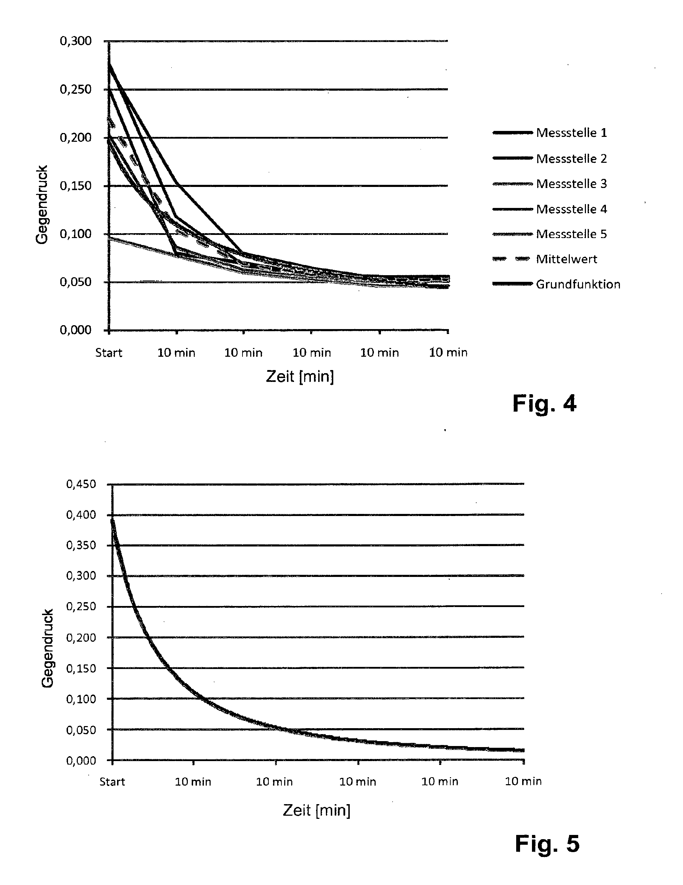

Das erfindungsgemäße Verfahren kann so geführt werden, dass für die Diagnose kontinuierlich oder zumindest in vorgegebenen zeitlichen Abständen während einer Reinigung Messdaten zur Ermittlung eines Reinigungserfolges aufgenommen werden. Dies ist anhand Fig. 4 und 5 dargestellt. Dabei werden bevorzugt zu jedem Messzeitpunkt mehrere Einzelmessungen gleichzeitig durchgeführt, wie dies in Fig. 4 veranschaulicht ist. Dadurch ist es möglich, aus einzelnen Messdaten örtlich verschiedener Messstellen einen Mittelwert zu bilden und aus einzelnen Mittelwerten wiederum eine Grundfunktion gemäß Fig. 5 zu ermitteln. Diese Grundfunktion lässt sich in der Regel durch ein mathematisches Modell beschreiben. Für die Aufnahme der einzelnen Messwerte an den einzelnen Messstellen kommen die zuvor beschriebenen Methoden zur Anwendung, insbesondere die Ermittlung eines Differenzdruckes über dem Filter 4 oder einem Katalysator oder, vor allem bei Wall-flow-Filtern, eine Messung mittels Sondierstäben, mit welchen eine Eindringtiefe und damit indirekt ein Reinigungserfolg messbar ist.

Die genannten Messverfahren (z. B. Druckdifferenz, Zelltiefe und/oder Gewicht) ergeben schwankende Messwerte, die für eine angestrebte Genauigkeit des Reinigungsergebnisses oftmals nicht ausreichend sind. Vorzugsweise sollte der Messwert deutlich genauer als das zu errechnende Ergebnis sein. Zu diesem Zweck werden die Messwerte statistisch aufbereitet, z. B durch Mittelwertbildung oder über eine Regressionsanalyse. Diese mathematische Funktion kann über verschiedene Verfahren angewendet werden, beispielsweise über eine Bildung der Ableitung nach der Zeit oder Integration der Kurvenfunktion über einen Messbereich, um einen möglichst stetigen, gering streuenden Verlauf einer gemessenen Reinigungsleistung zu erhalten und somit ein Messsignal, das für eine Prozesssteuerung verwendet werden kann. So kann eine erste Ableitung nach der Zeit der Reinigungsfunktion (in der Regel ein Polynom höherer Ordnung) die zu einem Zeitpunkt gegebene Tangentensteigerung der Funktion ermitteln und somit Gradienten der Funktion darstellen. Durch Vergleich der Kurven bzw. Funktionen mit Soll-Kurven kann bereits während einer Reinigung auf die voraussichtliche Prozessdauer extrapoliert werden oder es kann ein defekter Filter 4 oder Katalysator erkannt werden. Eine Integration der Funktion über einen Bereich ermöglicht ein Mitteln der Fläche unterhalb der Kurve in einem Diagramm (Messwert über Zeit) und kann somit eine noch erforderliche Reinigungsarbeit errechnen. Für die Ermittlung der Prozessfähigkeit nach Vorgaben, z. B. in der Automotiveindustrie, ist eine genaue statistische Auswertung des Prozessverlaufes oder-ergebnisses und ein stabiles Ergebnis wichtig.

Aus der Grundfunktion, die in Fig. 5 dargestellt ist, kann eine erste Ableitung gebildet werden, die eine Steigung der Kurve angibt. Damit ist das erhaltene Signal bzw. eine Aussage über eine Qualitätsänderung genauer als ein schwankender Gegendruckwert einer Einzelmessung. Die Grundfunktion kann üblicherweise durch ein Polynom zweiter Ordnung beschrieben werden, hat also keinen Wendepunkt, weshalb der Gradient stetig mit der Zeit fällt und sich die Grundfunktion asymptotisch der x-Achse annähert. Der Gradient wird null bzw. der Grenzwert geht gegen null, wenn kein weiterer Reinigungserfolg mehr erzielbar ist. Damit kann die Reinigung effizient gerade dann abgebrochen werden, wenn dieser Zustand erreicht ist und der Filter 4 oder Katalysator braucht nicht weiter gereinigt zu werden. Das Erreichen eines erforderlichen Reinigungsgrades lässt sich ebenfalls einfach feststellen, indem ein bestimmter Gegendruck unterschritten oder eine bestimmte Eindringtiefe der Sondierstäbe gegeben ist. Die Summe aller Messwerte und Tangentenwerte am Prozessende weist eine Varianz auf, die in eine Standardabweichung umgerechnet werden kann. Dabei zeigt sich im Rahmen der Erfindung, dass alle Werte innerhalb der sechsfachen Standardabweichung liegen. Eine derart geringe Standardabweichung erfüllt die Qualitätsstandards für Serienprozesse im Automotivebereich.

## Patentansprüche

1. Verfahren zum Reinigen von abgasführenden Komponenten wie verschmutzten Filtern und Katalysatoren, insbesondere von Kraftfahrzeugfiltern und -katalysatoren, wobei während eines Reinigungsvorganges mit einer Diagnoseeinrichtung eine Qualitätsänderung einer zu reinigenden Komponente wie eines Filters (4) oder Katalysators, insbesondere ein Reinigungsgrad, gemessen wird, **dadurch gekennzeichnet, dass** eine Qualitätsänderung der Komponente eine Änderung einer Reinigungsstrategie auslöst, wobei ein Wechsel von einer mechanischen auf eine thermische Reinigungseinrichtung oder umgekehrt erfolgt.

2. Verfahren nach Anspruch 1, **dadurch gekennzeichnet, dass** kontinuierlich oder an vorgegebenen Punkten ein struktureller Zustand der Komponente optisch gemessen wird.

3. Verfahren nach Anspruch 1 oder 2, **dadurch gekennzeichnet, dass** die Komponente ein Filter (4) oder Katalysator ist und Betriebsdaten der Komponente mit Messdaten aus der Diagnoseeinrichtung verknüpft werden, um mathematische Alterungsmodelle abzugleichen.

4. Verfahren nach einem der Ansprüche 1 bis 3, **dadurch gekennzeichnet, dass** eine Filtrationswirkung der Komponente über eine Anzahl und/oder Menge von die Komponente bei gegebenen Druckverhältnissen passierenden Partikeln gemessen wird.

5. Verfahren nach einem der Ansprüche 1 bis 4, **dadurch gekennzeichnet, dass** eine Verschmutzung der Komponente mit Kraftstoff oder Motoröl durch einen Kohlenwasserstoffsensor gemessen wird.

6. Vorrichtung (1) zum Reinigen von abgasführenden Komponenten wie verschmutzten Filtern und Katalysatoren, insbesondere von Kraftfahrzeugfiltern und -katalysatoren, umfassend eine Diagnoseeinrichtung und eine Reinigungseinrichtung, wobei mit der Diagnoseeinrichtung eine Qualitätsänderung einer Komponente, insbesondere ein Reinigungsgrad, während eines Reinigungsvorganges messbar ist, **dadurch gekennzeichnet, dass** eine mechanische und eine thermische Reinigungseinrichtung vorgesehen sind und abhängig von der gemessenen Qualitätsänderung der Komponente eine Reinigungsstrategie änderbar ist, indem ein Wechsel von der mechanischen auf die thermische Reinigungseinrichtung oder umgekehrt erfolgt.

7. Vorrichtung (1) nach Anspruch 6, **dadurch gekennzeichnet, dass** die Diagnoseeinrichtung einen optischen Sensor aufweist, mit dem eine Zelltiefe der Komponente und/oder eine Anzahl von bis auf einen Grund gereinigten Zellen messbar ist.

8. Vorrichtung (1) nach Anspruch 6 oder 7, **dadurch gekennzeichnet, dass** die Diagnoseeinrichtung eine Einrichtung umfasst, mit welcher ein Druckverlust in der Komponente messbar ist, insbesondere ein Druckmessgerät (3), in das ein Volumen- und Massenstromsensor integriert ist.

9. Vorrichtung (1) nach einem der Ansprüche 6 bis 8, **dadurch gekennzeichnet, dass** die Diagnoseeinrichtung einen optischen Sensor aufweist, insbesondere eine Kamera, mit welcher ein struktureller Zustand der Komponente ermittelbar ist.

10. Vorrichtung (1) nach einem der Ansprüche 6 bis 9, **dadurch gekennzeichnet, dass** mit der Vorrichtung (1) mehrere Komponenten parallel und/oder sequenziell vollautomatisiert reinigbar sind.

11. Vorrichtung (1) nach einem der Ansprüche 6 bis 10, **dadurch gekennzeichnet, dass** die Reinigungseinrichtung eine Pneumatikeinrichtung (2) umfasst, mit welcher die Komponente mechanisch mittels eines unter Überdruck stehenden gasförmigen Mediums, bevorzugt Luft, reinigbar ist.

12. Vorrichtung (1) nach einem der Ansprüche 6 bis 11, **dadurch gekennzeichnet, dass** die Vorrichtung (1) einen Sockel (7) umfasst, der licht- und/oder gasdurchlässig ist und auf dem die Komponente befestigbar oder lagerbar ist.

13. Vorrichtung (1) nach einem der Ansprüche 6 bis 12, **dadurch gekennzeichnet, dass** mindestens eine Filteranlage (6) vorgesehen ist, mit der ein Prozessmedium reinigbar ist.

14. Vorrichtung (1) nach einem der Ansprüche 6 bis 13, **dadurch gekennzeichnet, dass** eine Luftabsaugung (5) vorgesehen ist, mit der ein Prozessmedium von einem Arbeitsraum zu einer Filteranlage (6) und nach Reinigung des Prozessmediums in der Filteranlage (6) wieder zum Arbeitsraum transportierbar ist.

## Claims

1. A method for the cleaning of components carrying exhaust gas, such as contaminated filters and catalysts, in particular of motor vehicle filters and motor vehicle catalysts, wherein during a cleaning process a change in quality of a component which is to be cleaned, such as a filter (4) or catalyst, in particular a degree of purification, is measured by a diagnostic device, **characterized in that** a change in quality of the component triggers a change in a cleaning strategy, wherein a changeover from a mechanical to a thermal cleaning device, or vice versa, takes place.

2. The method according to Claim 1, **characterized in that** a structural status of the component is visually measured, continuously or at predetermined points.

3. The method according to Claim 1 or 2, **characterized in that** the component is a filter (4) or catalyst and operating data of the component are linked with measurement data from the diagnostic device, in order to replicate mathematical deterioration models.

4. The method according to one of Claims 1 to 3, **characterized in that** a filtration effect of the component is measured via a number and/or a quantity of particles passing through the component at given pressure conditions.

5. The method according to one of Claims 1 to 4, **characterized in that** a contamination of the component with fuel or engine oil is measured by a hydrocarbon sensor.

6. A device (1) for the cleaning of components carrying exhaust gas, such as contaminated filters and catalysts, in particular of motor vehicle filters and motor vehicle catalysts, comprising a diagnostic device and a cleaning device, wherein a change in quality of a component, in particular a degree of purification, is able to be measured by the diagnostic device during a cleaning process, **characterized in that** a mechanical and a thermal cleaning device are provided and a cleaning strategy is able to be changed as a function of the measured change in quality of the component, by a changeover taking place from the mechanical to the thermal cleaning device, or vice versa.

7. The device (1) according to Claim 6, **characterized in that** the diagnostic device has an optical sensor, by which a cell depth of the component and/or a number of cells cleaned up to a base is able to be measured.

8. The device (1) according to Claim 6 or 7, **characterized in that** the diagnostic device comprises a device by which a pressure loss in the component is able to be measured, in particular a pressure measuring apparatus (3), into which a volume- and mass flow sensor is integrated.

9. The device (1) according to one of Claims 6 to 8, **characterized in that** the diagnostic device has an optical sensor, in particular a camera, by which a structural status of the component is able to be determined.

10. The device (1) according to one of Claims 6 to 9, **characterized in that** several components are able to be cleaned in parallel and/or sequentially in a fully automated manner by the device (1).

11. The device (1) according to one of claims 6 to 10, **characterized in that** the cleaning device comprises a pneumatic device (2), by which the component is able to be cleaned mechanically by means of a gaseous medium, preferably air, which is under excess pressure.

12. The device (1) according to one of Claims 6 to 11, **characterized in that** the device (1) comprises a base (7) which is permeable to light and/or gas and on which the component is able to be fastened or mounted.

13. The device (1) according to one of Claims 6 to 12, **characterized in that** at least one filter system (6) is provided, by which a process medium is able to be cleaned.

14. The device (1) according to one of Claims 6 to 13, **characterized in that** an air extraction arrangement (5) is provided, by which a process medium is able to be transported from a working space to a filter system (6) and after cleaning of the process medium in the filter system (6) is able to be transported to the working space again.

## Revendications

1. Procédé de purification de composants guidant des gaz d'échappement comme des filtres et des catalyseurs encrassés, notamment de filtre et catalyseurs de véhicules automobiles, dans lequel pendant un processus de purification une variation de qualité d'un composant à purifier comme un filtre (4) ou catalyseur, notamment, un degré de purification, est mesurée au moyen d'un dispositif de diagnostic, **caractérisé en ce que** une variation de qualité des composants déclenche une modification d'une stratégie de purification, dans lequel un changement d'un dispositif de purification mécanique à un dispositif de purification thermique a lieu ou inversement.

2. Procédé selon la revendication 1, **caractérisé en ce que** un état structurel des composants est mesuré optiquement en continu ou à des instants prescrits.

3. Procédé selon la revendication 1 ou 2, **caractérisé en ce que** le composant est un filtre (4) ou un catalyseur et des données de fonctionnement des composant sont associées à des données de mesure provenant du dispositif de diagnostic, pour équilibrer des modèles de vieillissement mathématiques.

4. Procédé selon une des revendications 1 à 3, **caractérisé en ce que** une action de filtration des composants est mesurée par une pluralité et/ou quantité de particules traversant les composants en présence de rapports de pression donnés.

5. Procédé selon une des revendications 1 à 4, **caractérisé en ce que** une salissure des composants avec du carburant ou de l'huile de moteur est mesurée par un capteur d'hydrocarbure.

6. Dispositif (1) de purification de composants guidant des gaz d'échappement comme des filtres et catalyseurs encrassés, notamment des filtres et catalyseurs de véhicules, comprenant un dispositif de diagnostic et un dispositif de purification, dans lequel avec le dispositif de diagnostic une variation de qualité d'un composant, notamment un degré de purification, peut être mesuré pendant un processus de purification, **caractérisé en ce que** un dispositif de purification mécanique et un dispositif de purification thermique sont prévus et en fonction de la variation de qualité mesurée des composants une stratégie de purification peut être modifiée, en effectuant un changement du dispositif de purification mécanique au dispositif de purification thermique ou inversement.

7. Dispositif (1) selon la revendication 6, **caractérisé en ce que** le dispositif de diagnostic présente un capteur optique, avec lequel une profondeur de cellule de composant et/ou une pluralité de cellules purifiées sur un fond peut être mesurée.

8. Dispositif (1) selon la revendication 6 ou 7, **caractérisé en ce que** le dispositif de diagnostic comprend un dispositif, avec lequel une perte de pression dans les composants peut être mesurée, notamment un appareil de mesure de pression (3), dans lequel un capteur de débit volumique et de débit massique est intégré.

9. Dispositif (1) selon une des revendications 6 à 8, **caractérisé en ce que** le dispositif de diagnostic présente un capteur optique, notamment une caméra, avec laquelle un état structurel des composants peut être déterminé.

10. Dispositif (1) selon une des revendications 6 à 9, **caractérisé en ce que** avec le dispositif (1) plusieurs composants peuvent être purifiés en parallèle et/ou séquentiellement de manière totalement automatisée.

11. Dispositif (1) selon une des revendications 6 à 10, **caractérisé en ce que** le dispositif de purification comprend un dispositif pneumatique (2), avec lequel les composants peuvent être purifiés mécaniquement au moyen d'un milieu gazeux soumis à une dépression, de préférence de l'air.

12. Dispositif (1) selon une des revendications 6 à 11, **caractérisé en ce que** e dispositif (1) présente un socle (7), qui est perméable au gaz et/ou translucide et sur lequel les composants peuvent être fixés ou positionnés.

13. Dispositif (1) selon une des revendications 6 à 12, **caractérisé en ce que** au moins une installation de filtrage (6) est prévue, avec laquelle un milieu de processus peut être purifié.

14. Dispositif (1) selon une des revendications 6 à 13, **caractérisé en ce que** une aspiration d'air (5) est prévue, avec laquelle un milieu de processus peut être transporté d'une chambre de travail à une installation de filtrage (6) et après la purification du milieu de processus dans l'installation de filtrage (6), ramené dans la chambre de travail.
